# EUROPEAN PATENT APPLICATION

(11) **EP 1 365 567 A1**
(43) Date of publication of application: **26.11.2003**
(21) Application number: 02011391.6
(22) Date of filing: 23.05.2002
(51) Int. Cl.: H04M 3/533, H04M 3/42

(54) **Method for composing a dialog unit, for example an audio message, for a network-based automatic call assistant**

(71) Applicant: Swisscom AG, 3050 Bern (CH)
(72) Inventor: van Kommer, Robert, 1752 Viallars-sur-Glâne (CH); Dällenbach, Dominika, 3007 Bern (CH); Marx, Andreas, 8037 Zürich (CH)
(74) Representative: Saam, Christophe

(57) **Abstract**

A visual user-interface (338), for example a web page, is presented to the owner (1) of the call assistant. The web page comprises controls (33) with which he can select at least one audio component among a plurality of audio components. An audio mixer (32) mixes said audio components for composing the dialog unit (34).

Groups of several voice mail owners may share dialog unit templates defined and managed by a group administrator (7).

## Description

The present invention concerns a method employed in conjunction with a network-based call assistant for composing a dialog unit, for example an audio message such as a prompt for greeting a calling party and inviting him to leave a message when an incoming telephone call is forwarded to the assistant.

Voice mail systems are already known and serve the primary function of delivering an audio prompt message to a calling party when the called party - the "owner" of the voice mailbox - is unable to answer the call. Many voice mail systems further allows the calling party to record a voice message that can be played back to the owner of the voice mailbox.

Some current voice mail systems are based on a hardware audio recording device connected with or integrated into the owner's telephone equipment and comprising a semi-permanent memory, such as a tape or an electronic memory, for recording the owner's prompt message and the messages left by the callers. More and more often, those equipments are replaced by network-based voice mail systems operated by the operator of the public telephony network with which the "owner" of the voice mailbox has a subscription. In this case, the owner's prompt and the caller's messages are usually recorded on a hard disk on a voice mail server in the infrastructure of the public telephony network. To play back a recorded voice message, the owner calls the voice mail server, gets authenticated, and listens to the recorded messages. Internet-based voice mail systems are also known in which recorded audio message files can be downloaded with a conventional internet browser or attached to emails sent to the owner of the voice mail system.

Most network-based voice mail systems propose a standard prompt message that can be personalized by the owner. Standard prompt messages may include a spoken text such as "The called party is not here for the moment. You can leave a message after the signal". In order to replace this prompt message with a more personalized one, the owner must call the voice mail server, is authenticated usually with DTMF codes, proceeds to a selection in a voice menu to access the prompt message record portion of the menu, and then may speak his personalized prompt message into his handset and have it recorded.

As most owners do not update their prompt messages very often, the necessary steps for calling the voice mail server, being authenticated and navigating through the voice menu may be hard to recall. As a result, existing systems are often perceived as cumbersome and insufficiently owner-friendly. Furthermore, the composition of more complex audio prompt messages, including for example music, gimmicks or special beeps, is almost impossible, as the prompt message must be recorded in one step. Moreover, many owners do no like to listen to their own voice and are therefore very reluctant to record a personalized prompt message. The result is that more often than not, mailbox owners do not take the time to record a personalized message and use the standard prompt message that does not convey any personality.

Systems are already known which allow the voice mail owner to choose, for example over the internet, among several prerecorded greetings or to record new prompt messages. Those systems only broaden the choice of available standard messages, but offer little help for composing new personalized prompt messages or dialog units.

In corporate environments, it would be desirable to have a different voice mail prompt message for each employee, yet each employee prompt message to share at least some corporate common feature. For example, it would be highly desirable that all voice mail prompt messages start with the same corporate sound logo and go on with a spoken text adapted to the name and function of the called employee. It would be even better if each employee could record a specific prompt message, including for example special greetings for holidays absences, and if the all the voice mail prompt messages in a company still shared some common corporate features. Deploying such a strategy in a corporate environment using standard voice mail messages recording methods would however be very cumbersome, if not impossible.

As an extension of voice mail systems, automatic call assistants are also known which provide enhanced features for storing, diverting, responding and managing incoming calls. Although many call assistants comprise a voice mailbox, this feature is usually only one of many other functionalities available. For instance, call assistants are already available which use an interactive voice response system (IVR) for allowing a more complex interaction with the calling party and for instigating an action based on this dialog. IVR systems frequently comprise a voice recognition system, a voice synthesis system and a dialog manager for generating and decoding dialog units. As for conventional voice mail systems, network-based call assistant managers have also been suggested. They are however even more cumbersome to personalize and to deploy in a corporate environment than conventional voice mail systems.

It is therefore an aim of the invention to provide an improved method for composing and recording a dialog unit for a network-based call assistant that solves the above-mentioned problems.

Those problems are solved, among others, with a method including the steps of claim 1. Various preferred embodiments are disclosed in the dependant claims.

In particular, those problems are solved with a method for composing a dialog unit for a network-based call assistant comprising a step of presenting to the owner of said call assistant a visual owner-interface, for example a web page or a web site, for selecting at least one audio component among a plurality of audio components and a step of assembling or mixing said selected audio components for composing said dialog unit.

In this specification and in the claims, audio component means any kind of audio sample, including prerecorded music, prerecorded or synthesized voice, prerecorded or generated sounds such as beeps, any other kind of gimmick, sound logo or audio file, a multimedia object, or even any portion or component of a VoiceXML page or document. A VoiceXML page or document is a tagged text made of several elements including text portions, tagged text portions and links to other external objects, for example links to other VoiceXML-pages, to audio files or to JAVA-components. In this application and in the claims, we will use the concept of VoiceXML component to refer to any kind of element which can be found in a VoiceXML document or in a similar document.

A dialog unit can be a simple audio message, such as an audio prompt message, one or several VoiceXML documents, or a more complex object such as, for example, a set of audio components and rules for defining which component must be delivered under which circumstances.

This solution has the advantage that more elaborated audio dialog units, including for example audio messages with a sound logo, background music, a personalized spoken prompt message and a personalized beep signal, can be composed very easily by selecting audio components with a video interface. The spoken prompt message can be recorded by the owner with a microphone, retrieved from a library of prerecorded standard messages, or synthesized from a text inputted by the owner with a text-to-speech conversion module using a voice that can preferably be selected by the owner. This allows for a more intuitive, more user-friendly and more flexible method for composing audio messages. Furthermore, many owners would find it more comfortable to select audio components on a visual user-interface than to record their own voice.

The invention will be better understood with the help of the figures in which:
Figure 1 is a schematized representation of an embodiment of the of the invention.
Figure 2 illustrates an exemplary dialog unit template selection page presented in an embodiment of the invention.
Figure 3 illustrates an exemplary sound logo selection page presented in an embodiment of the invention.
Figure 4 illustrates an exemplary text message entering page presented in an embodiment of the invention.
Figure 5 illustrates an exemplary audio message mixing page presented in an embodiment of the invention.
Figures 6 is a time diagram illustrating a selected sound logo in an embodiment of the invention.
Figures 7 is a time diagram illustrating a prompt message generated by a text-to-speech converting system in an embodiment of the invention.
Figure 8 is a time diagram illustrating an audio message generated by appropriately mixing the sound logo of Figure 6 with the text message of Figure 7.

For the sake of simplicity, the following description will show in more detail an embodiment of the invention in which the inventive method is used for generating an audio prompt message used by a network-based voice mail system. However, the one skilled in the art will understand that the inventive method could also be applied for composing more complex dialog units used e.g. by call assistants.

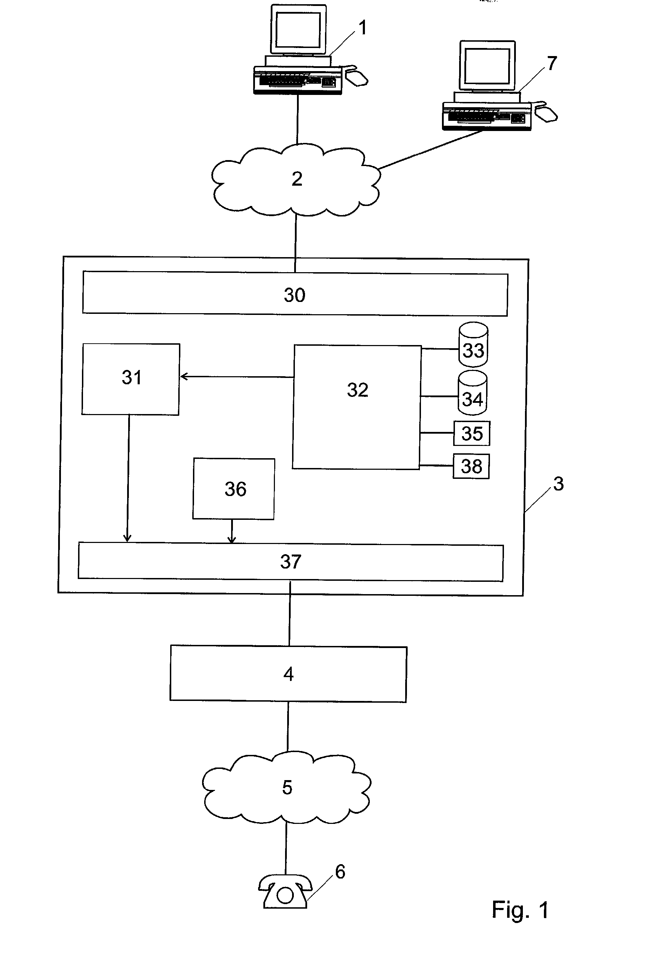

Fig. 1 shows a diagram of a telecommunication system including a network-based call assistant 3, here a network-based voice mail server. The voice mail server 3 is operated by a service provider, for example by the operator of a public telecommunication network, and comprises a plurality of voice mailboxes of different voice mailbox owners 1 for managing incoming calls from a plurality of callers 6. The voice mailbox owner uses a telecommunication terminal with a visual interface for managing his voice mailbox. In the illustrated embodiment, the terminal is a personal computer 1; the voice mailbox owners could equally well use other kinds of equipments, including portable computers, personal digital assistants (PDA) or mobile phones, for example GSM, GPRS, HSCSD or UMTS mobile phones with a visual or graphic interface, for example a WAP or WEB browser or any kind of graphic application. The voice mailbox owner 1 connects to the voice mail server 3 over a public telecommunication network, for example over the Internet.

Callers 6 use a telephone equipment 6 to establish a call with the desired party over a public telephony network 5. If the call cannot be established, for example when the desired called party is busy or not responding, the incoming call is diverted by a switch 4 in the network 5 to the voice mail server 3 administrating the voice mailbox of the called party. In an intelligent network, a Service Control Point (SCP) may perform the call diversion when the desired called party is registered for using the voice mail server 3.

The voice mail server 3 is preferably a web server, for example an http or wtp server, and can be accessed by the voice mailbox owner 1 with a standard web or WAP browser. It preferably comprises an authentication part 30 for identifying and authenticating the owner 1 and checking his right to access the system and to manage his voice mailbox. The authentication part 30 may request a user identification and a password from the owner 1, biometric data, or any other kind of known authentication procedure may be used if appropriate.

The voice mail server 3 further comprises a dialog units store portion 31 for storing the dialog units composed by the owner 1. The store portion 31 preferably comprises a hard disk or a RAM-disk. New dialog units can be written into the dialog units store portion 31 by a dialog unit generating module, for example an audio mixer 32. The audio mixer 32 mixes different audio components selected by the owner 1 and stores the mixed dialog unit into the store portion 31.

A template database 33 comprises a plurality of dialog unit templates that can be selected by the owner 1 to define the general audio appearance of the composed dialog unit. Dialog unit templates are files, for example text files or VoiceXML documents, defining the overall structure and appearance of several dialog units used by one or several voice mailbox owners. New dialog units can be created based on predefined dialog unit templates; existing dialog units can be stored as dialog unit templates in order to reuse at least some features of an existing dialog unit for other dialog units.

Predefined dialog unit templates are defined by the operator managing the voice mail server 3, by the owner of the voice mailbox and/or, as will be later described, by an administrator 7 administrating several voice mails of a group of owners 1; a voice mailbox owner can also add new personal templates or store existing dialog units as templates. Those supplementary templates are preferably available only to the owner or to a closed user-group selected by the owner 1.

The underlying template can determine the following features of a dialog unit:
- Sequence of audio components in the dialog unit - for example, first a sound logo, then a spoken prompt message mixed with background music, then a prompting beep;
- Exact or maximal duration of each audio component and/or of the dialog unit;
- Allowed type of each audio component (for example, wave file, other audio file, VoiceXML object, etc.);
- Sampling rate and compression method used for each audio component;
- Predefined list of allowed audio components for each portion of the dialog unit - for example one or several company sound logos and not editable background music;
- Multimedia content associated with each audio component (if allowed);
- Predefined list of voice models that can be used by a text-to-speech conversion unit for each audio component;
- Default settings for recording portions and for other interactive portions of the dialog unit;
- File attributes of the audio component (administration rights, etc.);
- Rules associated with each dialog unit (for example, dialog unit intended only for specific callers or groups of callers, or different dialog units for the weekdays vs. for the week-end);
- Transition between an audio component and the preceding and/or the following audio component (for example, fade-in, fade-out, pause, etc.);
- Etc.

An audio component database 34 contains a list of audio components, for example sound logos, songs, beeps, audio background elements, VoiceXML components or multimedia objects, which can be selected by an owner for composing a new dialog unit. At least some audio components are preferably associated in the database with a name and with a related visual representation, for example an icon or an image, allowing the owner to choose this audio component by selecting its name or by clicking on its icon on a graphic page. Multimedia objects can include static or animated images, for example a text, a company logo or an advertising spot which may be associated with a dialog unit and which will be displayed by the caller's equipment if this equipment features a multimedia display.The voice mail server 3 preferably further comprises a text-to-speech conversion module 35 allowing the owner 1 to enter a written prompt message and have this written message converted into a spoken message. The module 35 preferably allows the owner to select among different voice models for generating the spoken prompt message. The module 35 can be combined with a recording portion (not illustrated) allowing the owner to have his own voice message recorded, for example using a microphone connected with his equipment.

An uploading module 38 is provided that allows the owner 1 to upload an audio component, for example an audio file, or to record his own voice. The module 38 preferably performs several audio processing operations to adapt the format and the sampling rate of the uploaded audio files to the internal stored format.

A dialog manager 37 manages the incoming calls using the dialog units composed by the owner 1. In the case of a simple voice mail system, the dialog manager may consist merely of a system for detecting the incoming call and delivering to the calling party 6 an audio prompt message composed by the called party (i.e. by the voice mailbox owner 1). The dialog manager may allow the calling party 6 to record in a semi-permanent memory 36 a message (voice mail). In another embodiment, the dialog manager 37 comprises an interactive voice response system (IVR) for having a more involved interaction with the calling party, using perhaps more complex dialog units such as VoiceXML objects for example. In an embodiment, the dialog manager comprises a caller identification system, for example a system based on the caller line identification (CLI) and/or on the caller voice feature, to adapt the dialog or to deliver a different message depending on the calling party. This feature allows the voice mailbox owner to define a different prompt message for private calls and for business calls. Other events, such as the time and day of week, may instigate a different behavior of the voice mail server.

In a preferred embodiment, voice mailbox owners 1 may be arranged in closed groups with an administrator 7 administrating the voice mail of each member of the group. A group may for instance include all the employees of a company or members of a family. New members can be added to a group by the group administrator 7 or by entering a password defined by the administrator. Members of common groups may share common dialog unit templates and audio components that are not accessible by other users. In a company, a voice mail group administrator 7 can for example upload with the module 38 the company sound logo into the audio component database 34 and make it accessible to the employees of the company. If this sound logo is part of a template used by different voice mail owners, updating or replacing the sound logo will simultaneously update all voice mails. In a similar way, the administrator can change features of a company template in order to adapt in one step all the members' voice mail prompt messages.

Policy rules define who can add, modify or delete templates and audio components. In a preferred embodiment, it is even possible to define different policy rules for each component of each template. This allows for example a voice mail group administrator 7 to force each group member to use the same template with the same company sound logo and the same prompting beep, but to let the members free to adapt the spoken text message. In an IVR system, this allows the administrator to reprogram in one step the dialog for each member without deleting the personalized prompt messages defined by each member for some part of the dialog.

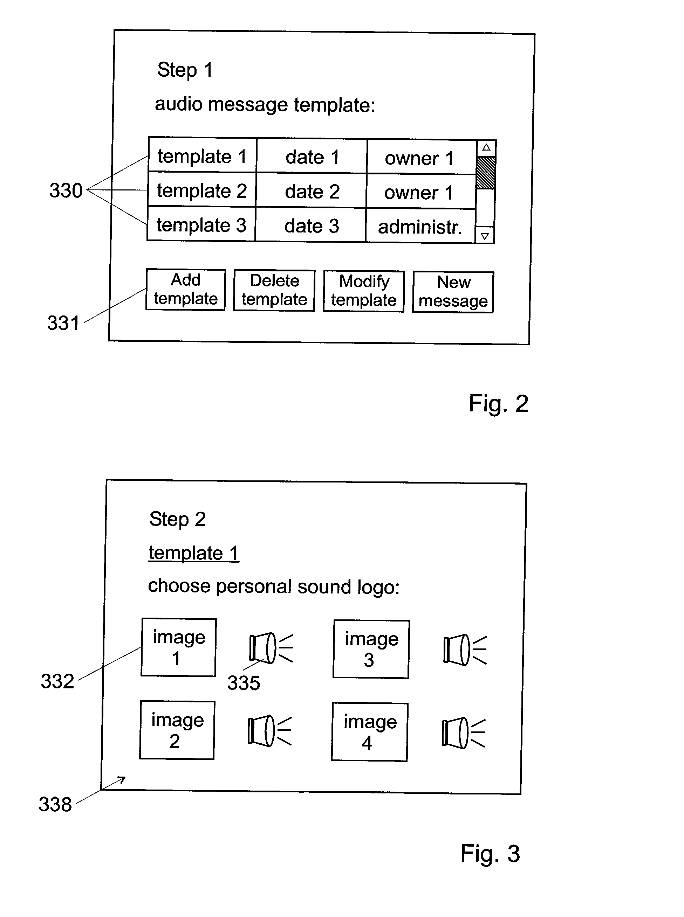

In operation and with regard to Figures 2-5, a call assistant owner 1 accesses the server 3 with a visually-enabled equipment to add or modify a dialog unit used by the server for managing incoming calls. After authentication and verification of the owner's rights, the owner can select during a first optional step a template for the dialog unit he wants to update. An exemplary template selection page is shown in Figure 2. A set of accessible dialog unit templates 330 is presented, each having a name (in this example template 1, template 2 and template 3), a creation date and an administrator name. A definition may be added if the intent of the template is not obvious from its name. It may also be possible to listen to an example of a dialog unit based on this template. The administrator name indicates who has the right to modify each template.

Selection buttons 331 allows the owner to add a new template to the list, to delete an existing template, to modify a template or to create a new dialog unit based on this template.

The step illustrated in Figure 2 may be omitted if only one template is available or for simple embodiments which do not feature templates.

Figure 3 illustrates a sound logo selection web page 338 used in a second step of the process of composition of a dialog unit. The page content and the options available can depend on the template selected during the previous step (here template 1). Additional audio component selection pages will be displayed if the selected template requires the selection of several audio components. In the example, the owner can select one sound logo among a list of four proposed sound logos. Each logo is illustrated by an icon 332 or by an image for an easier recognition of the content or atmosphere of the sound logo. For example, an image or poster from the movie can illustrate a movie musical theme. It is also possible to add a description to each sound logo. The owner 1 can also listen to each proposed logo by clicking on a loudspeaker icon 335 next to each image. A fee may be required for the use of some sound logos or for other components, in which case known on-line payment methods will be used for charging this fee. On the other hand, companies may pay to promote their sound logo as an advertising channel on this page.

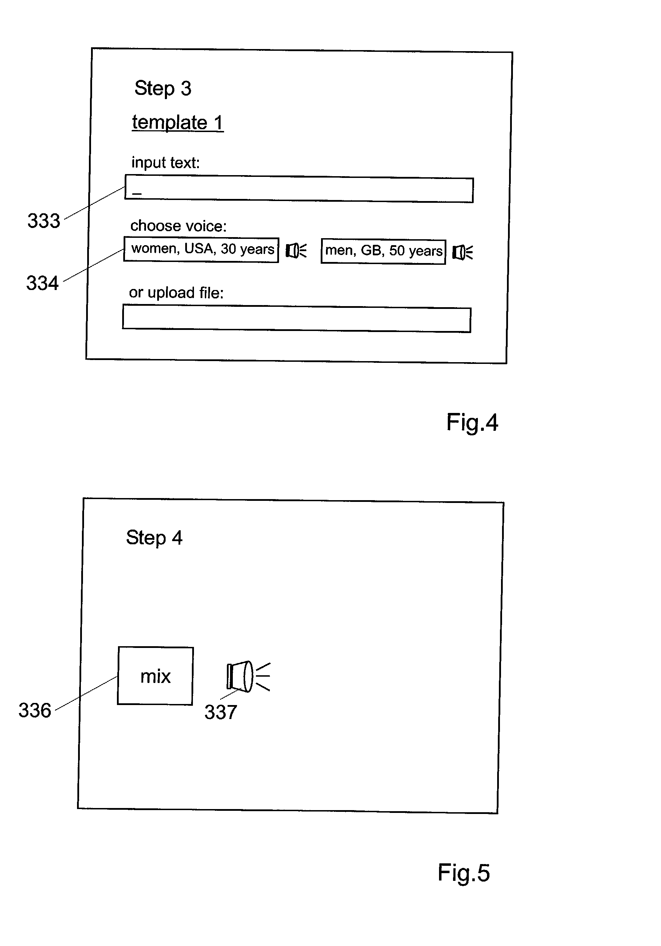

Figure 4 illustrates an exemplary prompt message entering page. As for the page illustrated in Figure 3, the content of this page depends on the template selected during the first step. On this page, the owner 1 can enter in the input field 333 a text he wants to have spoken as part of the composed dialog unit. He preferably can also select a voice used by the text-to-speech conversion system 35 for converting this text. In the example shown, the owner can choose between the voice of a 30-years old US woman or the voice of a 50-years old British man. The choice of voice models proposed can depend on the selected template and be part of the corporate audio identity. A wider choice may be offered if the system is intended to be used by owners using different languages. Owners can also prefer to record their own voice and upload an audio file from their personal computer hard disk or removable disk reader, instead of using a synthetic voice. If different audio file formats, sampling rates and/or compression methods are allowed, the uploading module 38 performs a conversion into a common format, preferably the G.711 uncompressed audio format in a telephony system, and into a common sampling rate, preferably 8kHz. Other sound file formats and sampling rates can be used in a voice-over IP system. Furthermore, the sound level will be automatically normalized to an appropriate level, and stereo to mono conversion may be performed if necessary.

Another way to proceed is to record and process the prompt message directly on the web page.

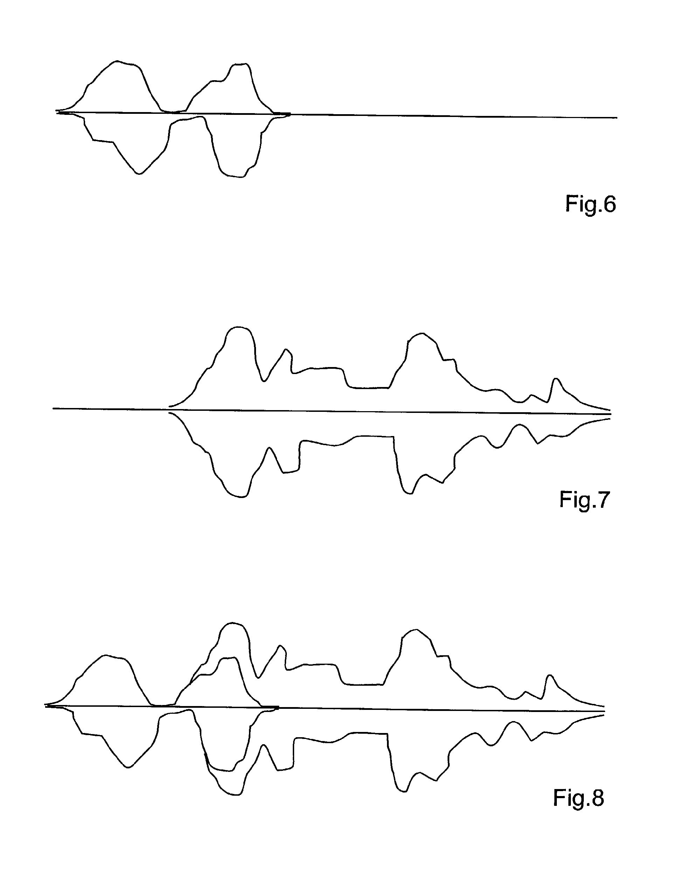

Figure 5 illustrates an exemplary page for composing the dialog unit once all the audio components have been selected. It comprises a mixing button for launching the mix of those audio components. If the composed dialog unit is an audio message, the composition process consists in mixing the selected audio components together, as illustrated in Figures 6 to 8. If the dialog unit is a more complex object, the composition process may comprise a compilation of the selected components, for example in the compilation of a complex VoiceXML document from various VoiceXML parts. After mixing, the owner can listen to the result by clicking on a loudspeaker icon 337. If he is satisfied with the composed dialog unit, he can save it and proceed. The composed dialog unit will then be used by the voice mail server 3 for each subsequent incoming call. Otherwise, the owner can return to one of the previous steps, for example with the goback button of his browser, and retry. In some embodiments, this step is omitted and the audio components are immediately mixed after having been selected.

Figures 6 to 8 illustrate the mixing process performed by the server 3 in the case of a simple dialog unit composed of a first sound logo mixed with a generated spoken message. Figure 6 illustrates an example of waveform of a sound logo selected by the owner during step 2 described in relation with Figure 3. Figure 7 illustrates an example of waveform of a spoken prompt message generated by the text-to-speech conversion module 35 from a written text entered by the owner during step 3 described in relation with Figure 4. Figure 8 illustrates the dialog unit composed by mixing together the sound logo with the spoken prompt message. As can be seen in the Figure, the audio mixer 32 does not just juxtapose or add the two waveforms, but performs a more complex cross-fading process by progressively reducing the amplitude of the sound logo while the spoken prompt message is introduced.

If the dialog unit is based on a very simple template, some steps described in relation with Figures 2 to 5 may be omitted. It may even be possible to reduce the whole process to a "one-click solution" in which the owner only has to choose a sound logo or to enter his prompt message. On the other hand, more steps and more pages may be needed for more complex dialog units. It may for example be possible for some applications to define some rules associated with each template, in order to define when and under which conditions this dialog unit should be used. This would allow an owner to compose different dialog units depending on the identity of the caller, on the time, on the day of week or on other events, in order for example to distinguish between private calls and business calls. Furthermore, a page may be defined for preparing new templates or for storing existing dialog units as templates or existing audio components as parts of templates.

The dialog unit composition method of the invention can be used for composing audio prompt messages or more complex dialog units used for example in network-based voice mail services, in network-based private exchanges or in other kinds of call assistants used for managing incoming calls. The dialog units composed with this method may be a simple prompt message left to the calling party, a melody for callers put on hold, or a more complex dialog or dialog part used for example for value-added services or for connecting a calling party with the appropriate service in an organization.

The possibility of having an administrator 7 administrating a group of voice mails or a group of call assistants of different owners in a same group provides unexpected benefits when combined with the visual audio component selection method of the invention. For example, as explained, an administrator can define a list of selectable company sound logos and of associated selecting icons or images. However, this feature could also be used for managing dialog units composed in a different way. Templates, attributes associated with each template and with each audio component in each template could therefore be used even with a more conventional dialog unit composition method.

## Claims

1. Method for composing a dialog unit (34), for example an audio prompt message, for a network-based automatic call assistant (3), for example a voice mail, said method comprising:
presenting a visual user-interface (338) to the owner (1) of said call assistant for selecting at least one audio component among a plurality of audio components,
mixing said selected audio components for composing said dialog unit (34).

2. The method of claim 1, wherein said visual owner-interface (338) is a web page accessed by the owner of said call assistant, at least one of said audio component (332) being selected among a plurality of components proposed by said web site.

3. The method of claim 2, further comprising a step of uploading at least one of said audio components from a web terminal of said owner to the server (3) operating said call assistant.

4. The method of one of the claims 2 or 3, further comprising a step of synthesizing at least one of said audio components with a text-to-speech conversion module (35) from a text inputted into said web terminal by said call assistant owner.

5. The method of one of the claims 1 to 4, wherein said dialog unit is an audio prompt message delivered to callers (6) calling said owner (1) when the owner is busy, not responding or when he has put the incoming call on hold.

6. The method of one of the claims 1 to 5, wherein said audio components comprise audio files, said step of mixing said audio components comprising a step of cross-fading said audio files.

7. The method of one of the claims 1 to 6, wherein said call assistant (3) comprises an interactive voice response system (37), said dialog unit comprising an interactive voice response system dialog component.

8. The method of claim 7, wherein said interactive voice response system dialog component comprises VoiceXML components.

9. The method of claim 8, said step of mixing said audio components comprising a step of compiling a VoiceXML document from a plurality of VoiceXML-components.

10. The method of one of the claims 1 to 9, further comprising a step of selecting a dialog unit template from a plurality of predefined templates (33).

11. The method of one of the claims 1 to 10, wherein at least one of said audio components comprises a sound logo, said method further comprising a step of selecting an icon or an image (332) associated with said audio component.

12. The method of one of the claims 1 to 11, wherein at least one of said audio components comprises a multimedia object.

13. The method of one of the claims 1 to 12, further comprising a step of having an administrator (7) select at least one feature of at least one dialog unit used by a plurality of owners (1).

14. The method of claim 13, said dialog units comprising a plurality of features and of attributes rights associated to those features for defining who has the authorizations to view, modify, execute or administrate said features.

15. Network-based call assistant (3) for managing calls incoming to a plurality of call assistant owners (1) in said network (2), comprising:
a server for presenting a visual interface (338) to said owners (1), said visual page comprising controls (332) for selecting at least one audio component among a plurality of audio components,
an audio component mixer (32) for mixing said selected audio components for composing a dialog unit (34),
a dialog manager (37) using said dialog unit (34) in managing said incoming call.

16. The network-based call assistant of claim 15, said server being a web server for presenting a web page (338) to said owners, said web page comprising controls (332) for selecting at least one audio component among a plurality of audio components.

17. The network-based call assistant of one of the claims 15 or 16, further comprising an audio component database (34) for storing a plurality of audio components selectable by said owners, said audio components comprising at least one sound logo.

18. The network-based call assistant of claim 17, further comprising an uploading module (38) for uploading new sound logos used in a dialog unit.

19. The network-based call assistant of claim 18, further comprising audio file format adapting means for adapting the audio file format of uploaded files.

20. The network-based call assistant of one of the claims 15 to 19, further comprising a text-to-speech conversion module (35) for converting into speech a text inputted by said call assistant owner.

21. The network-based call assistant of claim 20, wherein said text-to-speech conversion module allows said owner to select among a plurality of voice models.

22. The network-based call assistant of one of the claims 15 to 21, wherein said audio components comprise audio files, said audio component mixer allowing cross-fading of several audio files.

23. The network-based call assistant of one of the claims 15 to 22, wherein said dialog manager (37) comprises an interactive voice response system, said dialog unit comprising an interactive voice response system dialog component.

24. The network-based call assistant of claim 23, said audio component mixer comprising a compiler for compiling a VoiceXML document from a plurality of VoiceXML-components.

25. The network-based call assistant of one of the claims 15 to 24, further comprising a template database (33) comprising a plurality of dialog unit templates.

26. The network-based call assistant of one of the claims 15 to 25, further comprising administrating means for administrating the rights associated with at least some dialog units and/or dialog unit templates.

27. The network-based call assistant of one of the claims 15 to 26, further comprising an authentication part (30) for identifying and authenticating said owners (1) and checking the right to access the assistant (3) and to manage the voice mailbox.

28. The network-based call assistant of claim 27, said authentication part (30) recognizing groups of owners administrated by a common administrator (7).
